# EUROPÄISCHE PATENTANMELDUNG

(11) **EP 2 674 086 A2**
(43) Veröffentlichungstag der Anmeldung: **18.12.2013**
(21) Anmeldenummer: 13401058.6
(22) Anmeldetag: 06.06.2013
(51) Int. Cl.: A47L 9/12, A47L 9/20

(54) **Feinstaubsammelorgan für einen Staubsauger und Staubsauger mit einem solchen Feinstaubsammelorgan**

(30) Priorität: 13.06.2012 DE 102012105105
(71) Anmelder: Miele & Cie. KG, 33332 Gütersloh (DE)
(72) Erfinder: Bertram, Andre, 33739 Bielefeld (DE); Tiekötter, Stefan, 33699 Bielefeld (DE)

(57) **Zusammenfassung**

Die Erfindung betrifft ein Feinstaubsammelorgan (16) für einen Staubsauger (10) und Staubsauger (10) mit einem solchen Feinstaubsammelorgan (16), wobei das Feinstaubsammelorgan (16) einen Rahmen (24, 26) und ein in dem Rahmen (24, 26) fixiertes oder fixierbares plissiertes Filtermedium (22) umfasst, wobei der Rahmen (24, 26) relativ zu einer Ursprungsform des Rahmens (24, 26) verformbar ist und wobei ein Plissierwinkel (β) des plissierten Filtermediums (22) und eine Plissierweite (W) des plissierten Filtermediums (22) durch die Verformung des Rahmens (24, 26) relativ zu dessen Ursprungsform veränderbar ist.

## Beschreibung

Die Erfindung betrifft ein Feinstaubsammelorgan für einen Staubsauger sowie einen Staubsauger, nämlich einen zur Verwendung von Staubbeuteln vorgesehenen Staubsauger oder einen sogenannten beutellosen Staubsauger, mit einem solchen Feinstaubsammelorgan.

Die JP 2005-237 469 A offenbart ein Feinstaubsammelorgan bei dem der Plissierwinkel verändert werden kann. Nachteilig an der hier offenbarten Lösung ist, dass der Filterrahmen so an dem gefalteten Filtermedium angeordnet, dass eine Reinigung nur durch Verbiegen des Filterrahmens möglich ist.

Die Erfindung stellt sich das Problem, ein Feinstaubsammelorgan zu schaffen, das sich leicht und effektiv reinigen lässt. Dies soll insbesondere mit einer speziellen konstruktiven Ausführung des Feinstaubsammelorgans erreicht werden, . Weiterhin soll die Reinigung insbesondere trocken wie auch unter der Verwendung von Wasser möglich sein. Insgesamt wird eine Erhöhung der Nutzungsdauer (Lebensdauer) des Feinstaubsammelorgans angestrebt, die idealerweise die Lebensdauer des jeweiligen Staubsaugers erreicht oder zumindest in die Größenordnung der Lebensdauer des Staubsaugers reicht.

Erfindungsgemäß wird dieses Problem durch ein Feinstaubsammelorgan mit den Merkmalen des Patentanspruchs 1 gelöst. Dabei ist bei einem Feinstaubsammelorgan für einen Staubsauger, wobei das Feinstaubsammelorgan einen Rahmen und ein in dem Rahmen fixiertes oder fixierbares plissiertes Filtermedium umfasst, vorgesehen, dass der Rahmen relativ zu einer Ursprungsform des Rahmens verformbar ist und wobei ein Plissierwinkel des plissierten Filtermediums und eine Plissierweite des plissierten Filtermediums durch die Verformung des Rahmens relativ zu dessen Ursprungsform veränderbar ist.

Der Begriff verformbar meint hier und im Folgenden eine beabsichtigte, in der Konstruktion, im Aufbau oder in den verwendeten Materialien angelegte Verformbarkeit, also speziell eine zerstörungsfreie Verformbarkeit. Unter Plissierwinkel wird der Öffnungswinkel der Falten des plissierten Filtermediums verstanden. Die Plissierweite stellt den Abstand zwischen benachbarten Falten des plissierten Filtermediums dar.

Ein gefaltetes, also plissiertes Filtermedium ist günstig, wenn es darum geht, eine möglichst große Filtrationsfläche zu erreichen. Zudem bewirkt die Plissierung eine ausreichende Steifigkeit, so dass das Filtermedium auch im Saugluftstrom formstabil oder zumindest im Wesentlichen formstabil ist. Besonders am Boden der Falten der Plissierung lagert sich allerdings Staub ab. Dieser lässt sich leichter entfernen, wenn der Rahmen des Feinstaubsammelorgans wie hier und nachfolgend beschrieben verformbar ist, denn eine Verformung des Rahmens wirkt sich auch auf das im Rahmen angebrachte plissierte Filtermedium und speziell, gegebenenfalls örtlich begrenzt, auf eine Plissierweite des Filtermediums aus.

Der Vorteil eines erfindungsgemäßen Feinstaubsammelorgans besteht vor allem darin, dass sich dieses aufgrund seines speziellen Aufbaus und der dadurch bedingten Verformbarkeit leicht reinigen lässt. Besonders die Aufweitung des Plissierwinkels hin zu größeren Öffnungswinkeln erleichtert die Reinigung des plissierten Filtermediums. Das vom Feinstaubsammelorgan umfasste Filtermedium lässt sich damit leicht und vor allem wiederholt regenerieren. Die Filterlebensdauer lässt sich durch eine solche Regeneration deutlich erhöhen, so dass für das Feinstaubsammelorgan im Hinblick auf die Lebensdauer des jeweiligen Staubsaugers die Bezeichnung als Lifetime-Filter gerechtfertigt ist. Für den Benutzer entfällt die bisher bestehende Notwendigkeit für einen Nachkauf des Feinstaubsammelorgans.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Eine Verformbarkeit des Rahmens des Feinstaubsammelorgans wie hier und nachfolgend beschrieben lässt sich besonders gut erreichen, wenn der Rahmen teilweise oder abschnittsweise aus einem flexiblen Material gefertigt ist. Teilweise meint dabei einzelne Rahmensegmente, also zum Beispiel zwei Längsseiten eines rechteckigen Rahmens. Abschnittsweise meint, dass zum Beispiel solche Längsseiten nicht durchgängig entlang ihrer kompletten Erstreckung flexibel, insbesondere dehnbar, sein müssen, sondern dass ein flexibler beziehungsweise dehnbarer Abschnitt ausreicht, um die hier beabsichtigte Verformung zu erreichen. Als flexibles Material kommt bei besonderen Ausführungsformen ein dehnbares oder biegsames Material oder ein dehnbares und biegsames Material in Betracht. Alternativ zu solchen Materialien kann die Verformbarkeit des Rahmens auch durch zum Beispiel teleskopierbare Seitenteile des Rahmens gewährleistet werden.

Wenn der Rahmen teilweise oder abschnittsweise aus einem flexiblen und relaxierenden Material gefertigt ist, kehrt der Rahmen selbsttätig in seine Ursprungsform zurück, so dass ein Anbringen des Feinstaubsammelorgans nach der Filterregeneration unproblematisch ist, weil ohne weitere Einwirkung das Feinstaubsammelorgan in genau der Weise wieder mit dem Staubsauger kombinierbar ist, in der es vor der Entnahme im Staubsauger angebracht war.

Wenn das Filtermedium als Oberflächenfilter, insbesondere als Membranfilter, ausgeführt ist, dringt Feinstaub, der mit dem Filtermedium aus dem Abluft- oder Saugluftstrom entfernt wird, nicht in das Filtermedium ein und lagert sich stattdessen auf der stromaufwärts gewandten Oberfläche ab. Abgelagerter Feinstaub oder dergleichen kann vom Filtermedium also leicht entfernt werden, wenn es gelingt, dass der mitunter auch als Staubkuchen bezeichnete abgelagerte Staub vom Filtermedium abgeworfen wird. Dies lässt sich durch die Verformbarkeit des Feinstaubsammelorgans erreichen oder zumindest unterstützen. Speziell bei einem plissierten Filtermedium bewirkt eine mit der Verformung des Feinstaubsammelorgans bewirkte Beeinflussung der Plissierweite, dass angelagerter Feinstaub abgeworfen wird. Auch eine mit der Verformung des Feinstaubsammelorgans bewirkte Aufweitung des Plissierwinkels hin zu größeren Öffnungswinkeln erleichtert die Reinigung des plissierten Filtermediums. Zudem lässt sich ein als Oberflächenfilter ausgeführtes Filtermedium so ausführen, dass es waschbar ist. Eine derartige Reinigung mit einer Reinigungsflüssigkeit, zum Beispiel Wasser, verbessert die erreichbare Regeneration des Filtermediums nochmals deutlich.

Das oben genannte Problem wird auch mit einem Staubsauger mit einem Feinstaubsammelorgan wie hier und nachfolgend beschrieben gelöst. Die Erfindung betrifft damit insgesamt auch Staubsauger mit einem solchen verformbaren Feinstaubsammelorgan.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Figur 1: einen zur Verwendung eines Staubbeutels vorgesehenen Bodenstaubsauger,
- Figur 2: einen beutellosen Bodenstaubsauger,
- Figur 3: ein Feinstaubsammelorgan mit einem Rahmen und einem davon aufgenommenen, plissierten Filtermedium,
- Figur 4: ein Feinstaubsammelorgan mit einem relativ zu seiner Ursprungsform verformbaren, hier gedehnten Rahmen,
- Figur 5: das Feinstaubsammelorgan gemäß Figur 4 in einer Draufsicht und in seiner Ursprungsform,
- Figur 6: das Feinstaubsammelorgan gemäß Figur 4 in einer Draufsicht und mit einem gegenüber seiner Ursprungsform verformten Rahmen, dessen Verformung sich auch auf das plissierte Filtermedium auswirkt, und
- Figur 7: ein gebogenes Feinstaubsammelorgan zur Verdeutlichung, dass die Verformbarkeit des Feinstaubsammelorgans nicht auf eine Dehnung des Rahmens beschränkt ist, sondern jede Art von Verformbarkeit gemeint ist.

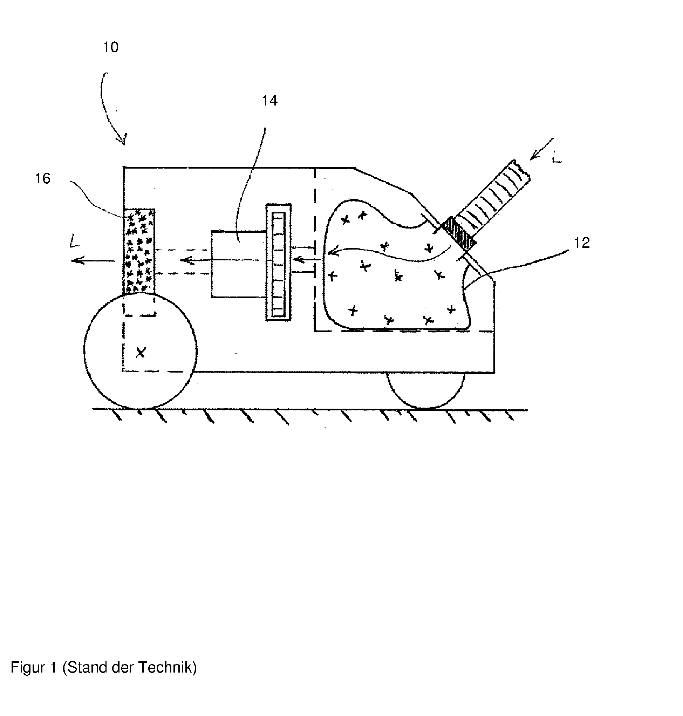

Figur 1 zeigt schematisch vereinfacht das Konstruktionsprinzip eines Staubsaugers 10, der zur Verwendung eines Staubbeutels als Grobstaubsammelorgan 12 vorgesehen ist (beutelbehafteter Staubsauger). Durch die von einem Gebläse 14 erzeugte Saugleistung wird die staubbeladene Luft (L) durch das Grobstaubsammelorgan 12 gezogen, vom Grobstaub befreit und abschließend durch ein sich stromabwärts hinter dem Gebläse 14 angeordnetes Feinstaubsammelorgan 16 (abluftseitiges Feinstaubsammelorgan 16) gedrückt. Das abluftseitige Feinstaubsammelorgan 16 filtert abschließend kleinste Staubpartikel (Feinstaub) aus der staubbeladenen Luft (L) und weist üblicherweise eine sogenannte Hepa-Zertifizierung auf.

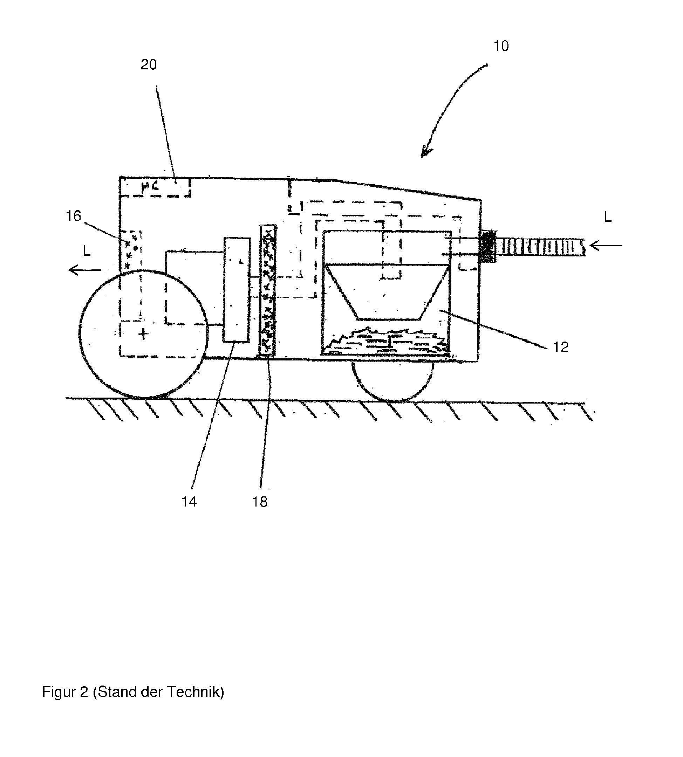

Figur 2 zeigt im Gegensatz zu Figur 1 in schematisch vereinfachter Form das Konstruktionsprinzip eines beutellosen Staubsaugers 10. Hier fungiert ein häufig auch als Zyklon bezeichneter Fliehkraftabscheider als Grobstaubsammelorgan 12. Stromabwärts des Grobstaubsammelorgans 12 - bei einzelnen Ausführungsformen des beutellosen Staubsaugers 10 auch im Grobstaubsammelorgan 12 (nicht gezeigt) - und jedenfalls vor dem Gebläse 14 ist ein mit Reinluft beaufschlagtes zusätzliches Feinstaubsammelorgan 18 (reinluftseitiges Feinstaubsammelorgan 18) angeordnet. Wie die beutelbehafteten Staubsauger 10 (Figur 1) umfassen auch die beutellosen Geräte hinter dem Gebläse 14 (stromabwärts) das abluftseitige Feinstaubsammelorgan 16 mit Hepa-Zertifizierung. Zur Befreiung staubbeladener Luft (L) von Staubpartikeln und schließlich von Feinstaub sind in einem beutellosen Staubsauger 10 demzufolge drei Staubsammelorgane 12, 18, 16 vorgesehen.

In Figur 2 ist noch eine Bedieneinheit 20 gezeigt, mit der zum Beispiel die Saugleistung des Gebläses 14 eingestellt werden kann. Auch Staubsauger 10 der in Figur 1 gezeigten Ausführungsform weisen eine solche Bedieneinheit 20 auf. Generell gilt, dass die nachfolgenden Ausführungen für beliebige Staubsaugertypen gelten, auch wenn in den Darstellungen in Figur 1 und Figur 2 jeweils ein Bodenstaubsauger gezeigt ist.

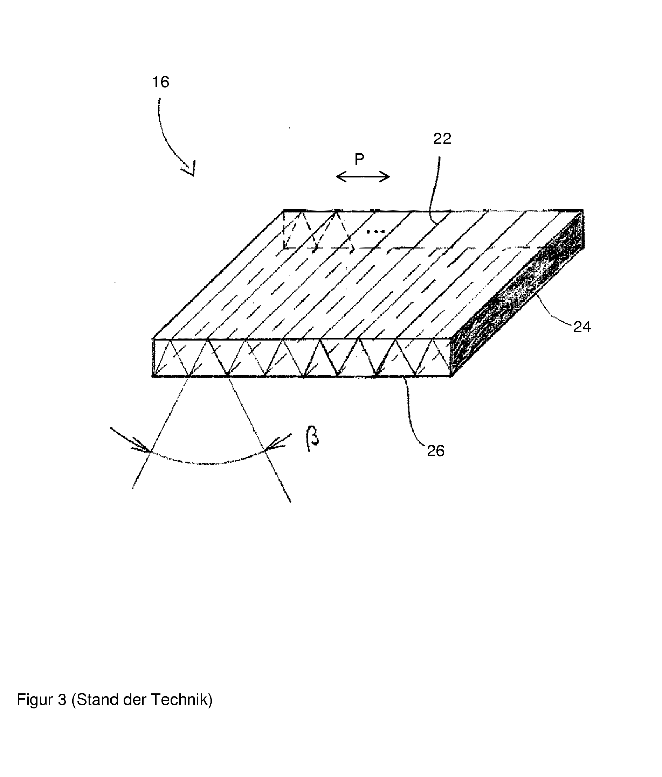

Figur 3 zeigt schematisch vereinfacht eine im Stand der Technik bekannte Ausführungsform eines abluftseitigen Feinstaubsammelorgans 16, das im Folgenden mitunter kurz auch nur als Feinstaubsammelorgan 16 bezeichnet wird. Danach umfasst das Feinstaubsammelorgan 16 ein Filtermedium 22, welches von einem formstabilen, meist aus einem Duroplast gefertigten Rahmen 24, 26 fixiert wird. Der Rahmen 24, 26 erstreckt sich umlaufend entlang der Außenkanten des Filtermediums 22 und weist insoweit Abschnitte 24 auf, die quer zur Plissierrichtung (P) verlaufen und Abschnitte 26, die parallel zur Plissierrichtung (P) verlaufen. Um eine möglichst große Filtrationsfläche zu realisieren sowie den Druckverlust gering zu halten, wird das Filtermedium 22 üblicherweise mit sehr spitzem Winkel (ß) plissiert. Als Filtermedium 22 kommen überwiegend elektrostatisch geladene Glasfasermaterialien oder auch PP-Vliese (Polypropylen-Vliese) zum Einsatz. Das Feinstaubsammelorgan 16 ist nicht waschbar und muss nach einer bestimmten Betriebszeit ausgetauscht werden.

Das bei den beutellosen Staubsaugern 10 (Figur 2) verwendete reinluftseitige Feinstaubsammelorgan 18 ist mitunter als waschbares Schaumstoffvlies ausgeführt. Bei einem im Grobstaubsammelorgan 12 befindlichen reinluftseitigen Feinstaubsammelorgan 18 werden üblicherweise auf einem formstabilen zylindrischen Träger fixierte und ebenfalls sehr eng plissierte Filtermedien 22 verwendet, die wieder von einem Rahmen 24 umschlossen werden. Als Material kommt alternativ auch ein elektrostatisch geladenes Vlies in Betracht, das allerdings nicht gewaschen werden darf.

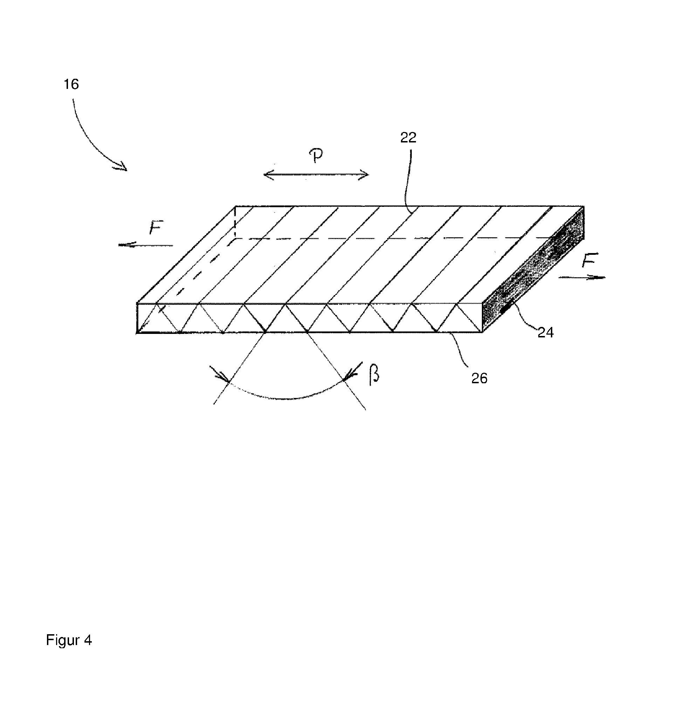

Figur 4 zeigt in perspektivischer Ansicht eine Ausführungsform des hier vorgeschlagenen Feinstaubsammelorgans 16, das sich dadurch auszeichnet, dass es sich relativ zur Ursprungsform verformen lässt, um somit eine effektivere und reproduzierbarere Reinigung und Regeneration des vom Feinstaubsammelorgan 16 umfassten Filtermediums 22 zu ermöglichen und damit eine sehr lange Lebensdauer des Filtermediums 22 (Filterlebensdauer) und damit des Feinstaubsammelorgans 16 insgesamt zu realisieren.

Das plissierte Filtermedium 22 ist an dem Rahmen 24, 26 zumindest an dessen quer zur Plissierrichtung (P) verlaufenden Abschnitten 24 fixiert. Der Plissierwinkel (ß) ist durch eine äußere Kraft (F) veränderbar, vornehmlich vergrößerbar. Hierzu ist der Rahmen 24, 26 an den zur Plissierrichtung (P) parallelen Seiten 26 flexibel, dehnbar und insbesondere relaxierend ausgebildet, so dass der Rahmen 24, 26 in Plissierrichtung (P) durch eine äußere und zum Beispiel von Hand aufgebrachte Zugkraft (F) gedehnt werden kann. Hauptsächlich kommen für die flexiblen Abschnitte 26 des Rahmens 24, 26 Elastomere - z. B. aus einem Gummiwerkstoff - in Betracht. Im Folgenden werden die parallel mit der Plissierrichtung (P) verlaufenden Abschnitte 26 des Rahmens 24, 26 auch als Längsseiten 26 und die quer zur Plissierrichtung (P) verlaufenden Abschnitte 24 des Rahmens 24, 26 auch als Breitseiten 26 des Rahmens 24, 26 bezeichnet. Diese Verformbarkeit des Rahmens 24, 26 lässt sich selbstverständlich auch auf im Vergleich zu der Darstellung in Figur 4 andere Rahmenformen übertragen.

Als Material für die quer zur Plissierrichtung (P) orientierten Breitseiten 24 des Rahmens 24, 26 kommt weiterhin ein nicht dehnbarer, insbesondere formstabiler Duroplast in Betracht, nämlich zum Beispiel Polypropylen (PP) oder Acrylnitril-Butadien-Styrol (ABS). Der komplette Rahmen 24, 26 bildet demzufolge ein Zweikomponentenbauteil. Alle Bestandteile des Feinstaubsammelorgans 16 werden bevorzugt in einem Arbeitsgang zusammengefügt. Das Feinstaubsammelorgan 16 bildet demnach mit dem jeweiligen Filtermedium 22 ein Dreikomponentenbauteil.

Durch den soeben beschriebenen Aufbau kann das Feinstaubsammelorgan 16 ähnlich wie ein Akkordeon in wenigstens einer Dimension gedehnt werden, wodurch der Staub vom Filtermedium 22 gelöst wird und auch aus den Vertiefungen/Tälern der Plissierung des Filtermediums 22 fällt oder dort zumindest entfernbar ist.

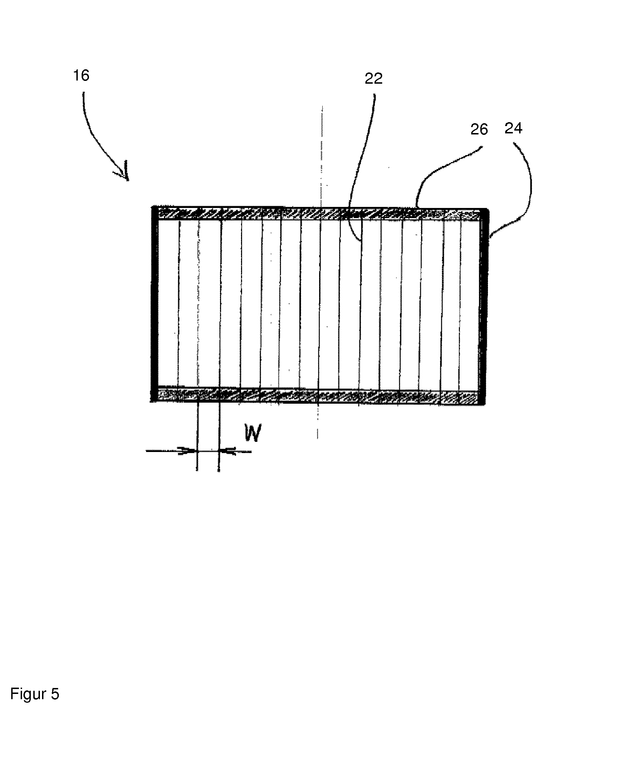

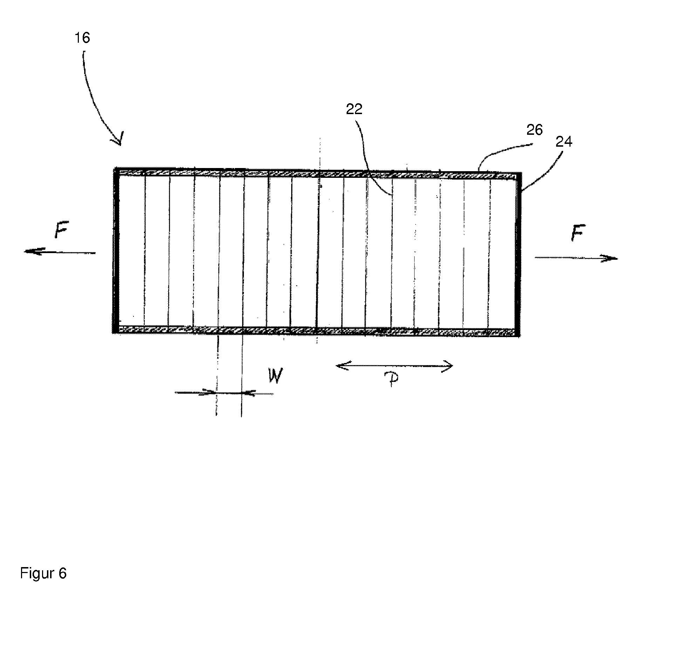

Die Darstellungen in Figur 5 und Figur 6 zeigen das Feinstaubsammelorgan 16 gemäß Figur 4 in einer Draufsicht. Figur 5 zeigt den entspannten, also betriebsüblichen Zustand, also das Feinstaubsammelorgan 16 mit dessen Rahmen 24, 26 in seinem Ursprungszustand. Figur 6 zeigt das durch die äußere Zugkraft (F) gespannte Feinstaubsammelorgan 16, also ein Feinstaubsammelorgan 16 mit seinem gegenüber dem Ursprungszustand verformten Rahmen 24, 26. Es ist direkt ersichtlich, dass durch die Verformung des Rahmens 24, 26 das Filtermedium 22 gedehnt wird und dass sich durch das Dehnen auch die Plissierweite (W) vergrößert, wodurch auch die Flanken der Plissierung leichter und effektiver gereinigt werden können.

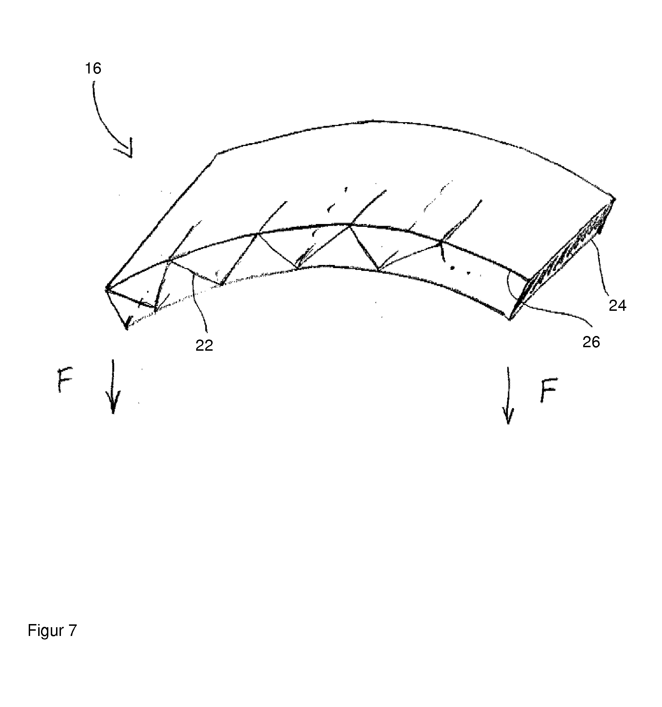

Durch die dehnbaren Längsseiten 26 des Rahmens 24, 26 kann das Feinstaubsammelorgan 16 auch gebogen oder verdreht werden, wie dies in Figur 7 für den Fall des Biegens dargestellt ist. Durch solche Verformungen des Rahmens 24, 26 wird die Reinigungswirkung nochmals verbessert.

Zur weiteren Steigerung der Reinigungswirkung kann das Feinstaubsammelorgan 16 zusätzlich noch zum Beispiel an einer Tisch- oder Wandkante abgeklopft werden. Aufgrund der Flexibilität von Teilen des Rahmens 24, 26 findet dabei gleichzeitig die hier vorgestellte Verformung des Rahmens 24, 26 statt.

Die Vorteile des verformbaren Feinstaubsammelorgans 16 werden noch verstärkt, wenn ein Filtermedium 22 verwendet wird, das neben einer sehr guten mechanischen Rückreinigbarkeit auch noch mit einer Reinigungsflüssigkeit, zum Beispiel Wasser, abgespült werden kann. Um diese Merkmalskombination zu erfüllen und um neben guten Filtrationseigenschaften eine leichte und effektive Staubablösung durch Verformung und Wasserbeaufschlagung zu ermöglichen, ist das Filtermedium 22 als plissiertes Membranfilter ausgeführt. Ein Membranfilter besteht üblicherweise aus einer dünnen, mit Mikroporen versehenen PTFE-Schicht (Polytetraflourethylen), die zum Beispiel auf einem textilen Träger fixiert ist. Bedingt durch diesen Aufbau des Membranfilters findet eine Flächenfiltration statt, bei der die Staubpartikel nicht in die Tiefe des Filtermediums 22 eindringen, sondern sich nur auf der Oberfläche des Filtermediums 22 verteilen. Hierdurch lässt sich das Membranfilter reproduzierbar abreinigen sowohl mechanisch durch die hier beschriebenen Möglichkeiten zur Verformung als auch durch Abwaschen oder Abspülen mittels einer Reinigungsflüssigkeit. Die Staubaufnahmefähigkeit des Filtermediums 22 verändert sich dabei nicht.

Bedingt durch den verformbaren Aufbau des Feinstaubsammelorgans 16 ist es notwendig, den dehnbaren, flexiblen Rahmen 24, 26 staubsaugerseitig in einer entsprechenden Form zu fixieren oder zu stabilisieren. Hierzu kommt eine kraft- und/oder formschlüssige Schale (nicht gezeigt) im Staubsauger 10 in Betracht. Zusätzlich oder alternativ kann der Rahmen 24, 26 Öffnungen (nicht gezeigt) zur Aufnahme von staubsaugerseitigen Positionierungsstiften oder dergleichen (nicht gezeigt) aufweisen. Diese konstruktiven Maßnahmen führen dazu, dass das verformbare Feinstaubsammelorgan 16 formstabil im Staubsauger 10 positioniert werden kann.

### Bezugszeichenliste

- 10: Staubsauger
- 12: Großstaubsammelorgan
- 14: Gebläse
- 16: abluftseitiges Feinstaubsammelorgan
- 18: reinluftseitiges Feinstaubsammelorgan
- 20: Bedieneinheit
- 22: Filtermedium
- 24: Rahmen (Abschnitte quer zur Plissierrichtung) / Breitseiten
- 26: Rahmen (Abschnitte parallel zur Plissierrichtung) / Längsseiten

## Patentansprüche

1. Feinstaubsammelorgan (16), insbesondere in einer Funktion als abluftseitiges Feinstaubsammelorgan (16), für einen Staubsauger (10), wobei das Feinstaubsammelorgan (16) einen Rahmen (24, 26) und ein in dem Rahmen (24, 26) fixiertes oder fixierbares plissiertes Filtermedium (22) umfasst, wobei der Rahmen (24, 26) relativ zu einer Ursprungsform des Rahmens (24, 26) verformbar ist und wobei ein Plissierwinkel (ß) des plissierten Filtermediums (22) und eine Plissierweite (W) des plissierten Filtermediums (22) durch die Verformung des Rahmens (24, 26) relativ zu dessen Ursprungsform veränderbar ist.

2. Feinstaubsammelorgan (16) nach Anspruch 1 oder 2, wobei der Rahmen (24, 26) teilweise oder abschnittsweise aus einem flexiblen Material, insbesondere einem dehnbaren und/oder biegsamen Material, gefertigt ist.

3. Feinstaubsammelorgan (16) nach Anspruch 3, wobei der Rahmen (24, 26) teilweise oder abschnittsweise aus einem relaxierenden Material gefertigt ist.

4. Feinstaubsammelorgan (16) nach einem der vorangehenden Ansprüche, wobei das Filtermedium (22) als Oberflächenfilter, insbesondere als Membranfilter ausgeführt ist.

5. Feinstaubsammelorgan (16) nach Anspruch 5, wobei das Filtermedium (22) waschbar ist.

6. Staubsauger (10) mit einem Feinstaubsammelorgan (16) nach einem der vorangehenden Ansprüche.
